# EUROPEAN PATENT APPLICATION

(11) **EP 1 569 227 A1**
(43) Date of publication of application: **31.08.2005**
(21) Application number: 02783693.1
(22) Date of filing: 29.11.2002
(51) Int. Cl.: G11B 20/12, G11B 5/09, G11B 5/86, G11B 5/82

(54) **INFORMATION RECORDING MEDIUM**

(71) Applicant: FUJITSU LIMITED, Kanagawa 211-8588 (JP)
(72) Inventor: KURODA, Sumio, c/o FUJITSU LIMITED, Kawasaki-shi, Kanagawa 211-8588 (JP); OZAKI, Kazuyuki, c/o FUJITSU LIMITED, Kawasaki-shi, Kanagawa 211-8588 (JP)
(74) Representative: Stebbing, Timothy Charles
(86) International application number: PCT/JP2002/012485
(87) International publication number: WO 2004/051649

(57) **Abstract**

An information recording medium **characterized by** comprising a plurality of kinds or a plurality of sets of servo information recorded as magnetic information and used for detecting a position of the information recording medium relative to a magnetic head. Even if some sets of servo information become defective, the information recording medium is not determined as a defective, and user data can be recorded and reproduced on the information recording medium by utilizing servo information of another set which is determined to be normal.

## Description

### TECHNICAL FIELD

The invention relates to an information recording medium, more particularly, a magnetic disk medium produced by magnetic transfer or the like, a configuration of servo information recorded as magnetic information on the medium, and a magnetic disk drive in which the medium is assembled.

### BACKGROUND ART

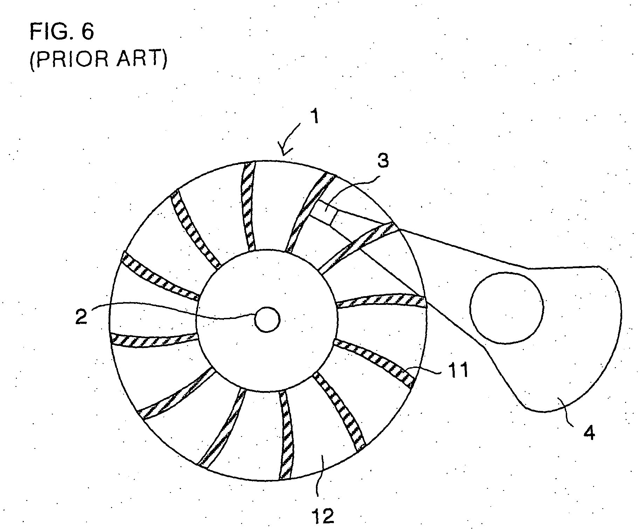

As shown in FIG. 6, a magnetic disk drive (or hard disk drive (HDD)) is mainly constructed of a magnetic disk medium 1 for magnetically recording information, a spindle motor 2 for rotating the magnetic disk medium at high speed, and a magnetic head 3 for recording or reproducing information on the rotating magnetic disk medium. The magnetic head 3 is attached to the tip portion of a rotary positioner 4 which turns within the range of a predetermined angle.

On the magnetic disk medium 1, position information (hereinafter, referred to as servo information) for detecting a position of a magnetic head relative to a track on the magnetic disk medium is magnetically recorded. On the basis of the position information, user data is recorded on the magnetic disk medium.

The magnetic disk medium 1 is divided into servo areas 11 for recording servo information and user data areas 12 for recording user data. As shown in FIG. 6, one servo area 11 is formed as a pattern extending in the radial direction of the medium. The servo areas 11 and the user data areas 12 are alternately arranged at predetermined intervals in the circumferential direction of the medium.

The recording area is also divided into areas called tracks concentrically in the circumferential direction of the medium. Further, one track is divided into a plurality of sectors as unit areas of recording/ reproduction. One sector is constructed of the servo area 11 and the user data area 12. Servo information recorded on the servo area 11 varies according to development manufactures. The servo information is mainly constructed of a servo clock pattern, a sector mark (SM), and a pattern area for tracking. On each of the servo areas 11, a set of servo patterns which are predetermined sequence patterns are recorded.

In conventional principle HDDs, servo information is recorded by a device called a servo track writer (STW) onto a magnetic disk medium on which a magnetic film is formed but no information is recorded. In the recording method, servo information is magnetically recorded on the servo area 11 of each of the tracks while slightly moving the rotary positioner 4. In this case, in an HDD having recording capacity of 20 gigabytes, it takes about 10 minutes to record servo information.

Since the track recording density is increasing at present, time required for servo information recording process tends to increase and precision of tracking positioning has to be further increased.

A magnetic transfer technique has been proposed for the purpose of shortening servo information recording time (Japanese Unexamined Patent Publication No. HEI 10(1998)-40544).

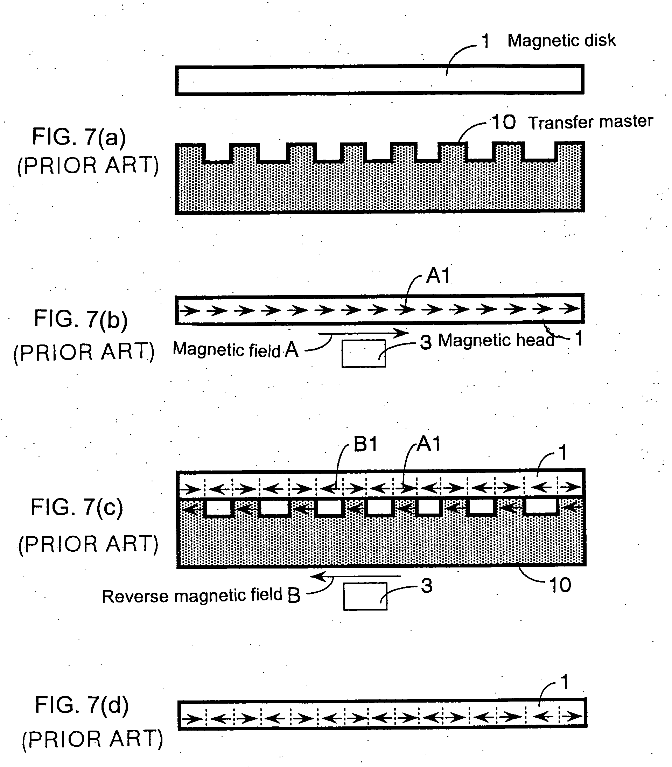

FIGS. 7(a) to 7(d) show the procedure of a conventional magnetic transfer method.

As shown in FIG. 7(a), a transfer master disk 10 having a pattern corresponding to servo information to be recorded on the magnetic disk medium 1 is prepared. In a surface of the transfer master disk 10, small trenches are formed in correspondence with the positions of servo information, thereby forming a pattern of pits and projections corresponding to the servo information. A magnetic layer is also formed so that it has the pattern of pits and projections on the surface of the transfer master disk 10.

First, as shown in FIG. 7(b), an external magnetic field A (magnetic head 3) is allowed to approach the magnetic disk medium 1 for recording servo information to magnetize the magnetic layer provided on the magnetic disk medium in one direction (A1) (initial magnetization).

Next, as shown in FIG. 7(c), in a state where the transfer master 10 and the magnetic disk medium 1 are in close contact to each other, a magnetic field B opposite in direction to the initial magnetization is applied from the transfer master 10 side.

At this time, portions of the transfer master 10 which are in contact with the magnetic disk medium 1 are magnetized in the same direction B1 as that of the opposite magnetic field. In portions of the magnetic disk medium 1 which are in contact with the transfer master 10, the magnetization in the initial magnetization direction A1 in FIG. 7(b) is maintained. Portions of the magnetic disk medium 1 which are not in contact with the transfer master 10 are magnetized in the same direction B1 as the opposite magnetic field direction as shown in FIG. 7(c).

Finally, as shown in FIG. 7(d), the transfer master 10 and the magnetic disk medium 1 are separated from each other.

Thus, the servo information formed as the pattern of pits and projections in the transfer master 10 is transferred as magnetic information onto the magnetic disk medium 1.

According to the magnetic transfer method, time required to form servo information can be shortened to about several tens seconds.

In the magnetic transfer method, the magnetic disk media 1 as slaves are brought one by one into close contact with the transfer master 10 in a clean room to transfer servo information. However, by repeated cycles of bringing into close contact and separating, dusts are caught, a part to which magnetic servo information cannot be accurately transferred forms, and a so-called transfer defect may occur.

In a process for forming a semiconductor such as an IC, one defect on a wafer is a partial defect, which forms a defective, merely deteriorating the yield. In the case of servo information on a magnetic disk, however, when there is even one defect, the magnetic disk cannot be used as an HDD product. Occurrence of a defect is not permitted as a rule.

In order to prevent a transfer defect as much as possible and to improve the yield, various defect testing methods have been proposed.

For example, Japanese Unexamined Patent Publication No. 2001-249080 discloses a testing method for a projected defect comprising allowing light to enter a magnetic disk at a small angle and detecting scattered light to detect dusts for preventing occurrence of a defective thereby improving the yield of products.

Japanese Unexamined Patent Publication No. 2001-351231 discloses a magnetic disk manufacturing method comprising conducting a particle test by optical means in processes before and after a magnetic transfer process to distinguish between a non-defective and a defective.

Japanese Unexamined Patent Publication No. 2001-176001 discloses a magnetic disk testing method comprising recording a specific defect inspection pattern on a portion on which no track information is recorded and detecting a scratch defect by a magnetic head for distinction.

Japanese Unexamined Patent Publication No. 2002-74601 discloses a magnetic disk inspecting method that uses, as an inspection signal to be recorded on a magnetic disk, a signal having, in the radial direction, a length ten times or more the width of a device of a magnetic head.

Japanese Unexamined Patent Publication No. 2001-283432 discloses a magnetic recording medium manufacturing method comprising cleaning a magnetic transfer master and tape-vanishing, performing magnetic transfer onto a magnetic disk, conducting a glide height test, and assembling the magnetic disk into an HDD.

Japanese Unexamined Patent Publication No. 2001-167434 discloses a magnetic transfer method comprising repeating close contact and force-feeding operations on a dummy disk and a magnetic transfer master and then performing magnetic transfer to smooth an abnormal projection on the surface of the magnetic transfer master and to remove a foreign matter in advance.

Even if the inspecting methods permits distinction between a non-defective and a defective with reliability and prevention of shipment of a defective, there is still a demand to reduce occurrence of a defective as much as possible and further improve the yield. As recording density becomes higher, a smaller dust may cause a transfer defect, making it more difficult to improve the yield.

When a defect of servo information is found by any of the above inspections, usually, the HDD is not reused but is disposed. This is one of factors of decreasing the yield.

Further, when a transfer master is produced for each HDD product or each kind of servo information, the manufacturing cost of a transfer master increases and management becomes complicated.

In the case of recording servo information by magnetic transfer, it is impossible to completely eliminate eccentricity. If a product in which small eccentricity occurs is not determined as a defective but can be used as a product, it is preferable from the view of improvement in yield.

### DISCLOSURE OF THE INVENTION

The present invention provides an information recording medium on which not one set of servo information but a plurality of sets of servo information are recorded. Even if servo information of one set becomes defective, the information recording medium is not determined as a defective, and user data can be recorded and reproduced on the information recording medium by utilizing servo information of another set which is determined to be normal.

An information recording medium according to the present invention is characterized by comprising a plurality of kinds or a plurality of sets of servo information recorded as magnetic information and used for detecting a position of the information recording medium relative to a magnetic head.

The present invention also provides an information recording medium in which each of the plurality of kinds of servo information is constituted of a plurality of servo patterns radially formed at fixed intervals in the circumferential direction of a track, and servo patterns of different kinds are alternately arranged so as not to cross each other.

According to the present invention, since a plurality of sets of servo information are recorded on a single information recording medium, even if servo information of one set becomes defective, non-defective servo information of another set can be used. Thus, the yield of the information recording medium can be improved and the manufacturing cost can be reduced.

### BRIEF DESCRIPTION OF THE DRAWINGS

FIG. 1 is a schematic plan view showing the configuration of servo information on an information recording medium according to the present invention.
FIG. 2 is an explanatory diagram showing an example of servo information to be recorded on the information recording medium according to the present invention.
FIG. 3 is a schematic configuration block diagram showing an embodiment of a magnetic disk drive (HDD) according to the present invention.
FIG. 4 is an explanatory diagram showing a method of producing a magnetic transfer master according to the present invention.
FIG. 5 is an explanatory diagram of a magnetic transfer master, according to the present invention, having servo information adapted to models.
FIG. 6 is a configuration diagram of a conventional magnetic disk drive.
FIG. 7 is an explanatory diagram showing the procedure of a conventional magnetic transfer method.

### BEST MODE FOR CARRYING OUT THE INVENTION

The present invention provides an information recording medium characterized by comprising a plurality of kinds or a plurality of sets of servo information recorded as magnetic information and used for detecting a position of the information recording medium relative to a magnetic head. Herein, servo information of each set includes a servo identification signal specifying a set to which the servo information belongs.

Since the servo information includes such a servo identification signal, it becomes possible to select a specific kind or set of servo information and utilize the selected servo information for recording/reproduction. Herein, a medium comprising a plurality of kinds of servo information can be utilized for magnetic disk drives of different models. Further, a medium including a plurality of sets of servo information can be utilized as a normal medium if one of the plurality of sets of servo information is normal; thus improving the yield of the medium.

In addition, each of the plurality of kinds of servo information may be a pattern predetermined for each of models of magnetic disk drives in which the information recording medium is to be mounted. Herein, the model means, for example, a size of a magnetic disk drive (HDD). In the case of currently available HDDs, a servo information pattern for a 3.5-inch HDD and a servo information pattern for a 2.5-inch HDD are recorded on one medium.

Since patterns determined for the plurality of models, respectively, are recorded on one medium, it is possible to reduce the manufacturing cost and the management cost for the information recording medium, and prevent a work error upon manufacturing the medium.

Further, each of the plurality of sets of servo information may be a pattern formed by using a center of rotation thereof as a reference, the center of rotation deviated due to a predetermined eccentricity on the assumption that the eccentricity occurs.

With this configuration, even if an eccentricity occurs after assembling an information recording medium in an HDD, the medium does not become defective, and a normal recording/ reproduction operation can be performed by utilizing servo information that can cope with the eccentricity having occurred; thus, improving the yield and reducing the manufacturing cost.

Preferably, the plurality of kinds or the plurality of sets of servo information are recorded by magnetic transfer; however, the servo information may be recorded by another method.

The present invention also provides a magnetic disk drive in which an information recording medium having the aforementioned configuration is mounted. Herein, servo information of a kind in which the absence of a defect is confirmed by a predetermined inspection method is selected from the plurality of kinds or the plurality of sets of servo information recorded on the information recording medium, and a recording/reproducing process is executed on the selected servo information. With this configuration, it is possible to improve the yield of the magnetic disk drive.

More specifically, the magnetic disk drive may comprise: a storage unit having identification information prestored therein, the identification information corresponding to a servo identification signal, the servo identification signal specifying a set of servo information; a selecting unit for reading identification information from the storage unit to select servo information of a set specified by a servo identification signal corresponding to the read identification information; and an executing unit for performing recording/ reproduction by using only the servo information selected by the selecting unit.

The present invention also provides a magnetic transfer master disk for recording a plurality of kinds of servo information on an information recording medium by magnetic transfer, wherein patterns of pits and projections for magnetically transferring the plurality of kinds of servo information are formed in areas corresponding to areas of the information recording medium on which the plurality of kinds or the plurality of sets of servo information are to be recorded.

If one magnetic transfer master is produced, a magnetic disk having several kinds or sets of servo information can be produced from this disk, so that it is possible to reduce the manufacturing cost and the management cost of the magnetic master disk.

The present invention also provides a method of selecting servo information recorded on an information recording medium, characterized by comprising the steps of: checking servo patterns of each kind or set of servo information for a defect; selecting servo information of an arbitrary kind or set from kinds or sets having no defect in servo patterns; and storing identification information specifying the selected kind or set of servo information onto a magnetic disk drive in which the information recording medium is mounted.

With this configuration, user data can be securely recorded and reproduced, on the basis of servo information having no defect, on an information recording medium on which a plurality of kinds or sets of servo information are recorded.

The present invention also provides a method recording servo information onto an information recording medium, comprising the steps of: initially magnetizing a magnetic layer formed on a surface of an information recording medium track by track in one direction; bringing a magnetic transfer master and the information recording medium into close contact with each other, the magnetic transfer master having patterns of pits and projections formed thereon for magnetically transferring servo patterns including a servo identification signal specifying a kind of servo information to areas of the information recording medium on which a plurality of kinds or sets of servo information are to be recorded; and applying a magnetic field opposite in direction to the initial magnetization and, after that, separating the magnetic transfer master and the information recording medium from each other.

The present invention will be described in detail below on the basis of embodiments shown in the drawings. However, the present invention is not limited to the embodiments.

In the following embodiments, an information recording medium will be referred to as a magnetic disk.

### Configuration of Magnetic Disk

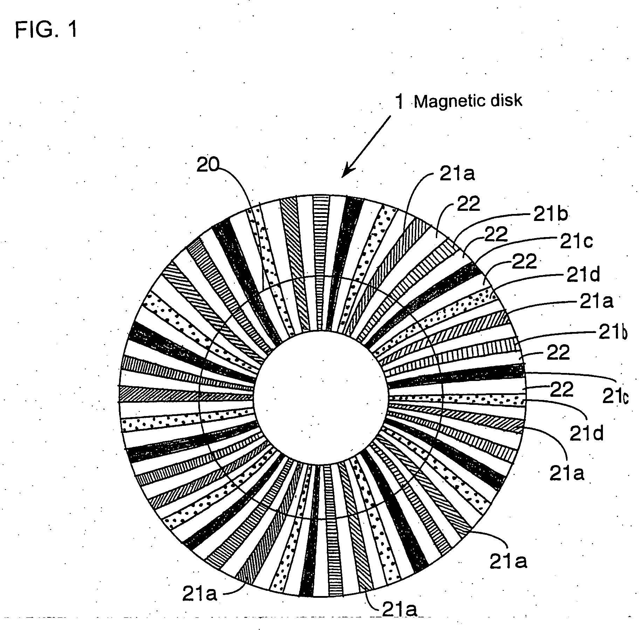

FIG. 1 is an explanatory diagram showing the configuration of servo information of a magnetic disk according to the present invention.

FIG. 1 is a plan view of a disc-shaped magnetic disk. A plurality of sets of servo information are sequentially formed as band-shaped servo patterns radially in the circumferential direction of tracks 20.

Attention is paid to one set of servo information. One set of servo information is constructed of about 60 to 100 servo patterns per medium, which are formed at fixed intervals in the circumferential direction of the track 20. The number of servo patterns varies according to the kind of a magnetic disk drive and a manufacturer. Neighboring servo patterns are servo information of different sets. An area between neighboring servo patterns is an area on which user data is recorded.

For example, in FIG. 1, reference numerals 21a, 21b, and 21c denote servo pattern areas on which servo information is recorded, and reference numeral 22 denotes an area on which user data is recorded.

Reference numeral 21a denotes an area on which servo information of a first set is recorded, and reference numeral 21b denotes an area on which servo information of a second set, which is different from that of the first set, is recorded. Similarly, reference numerals 21c and 21d denote areas on which servo information of a third set and servo information of a fourth set which is different from each other is recorded. The number of sets of servo information is not limited to four but n (n ≥ 2) sets of servo information may be recorded. On all the areas denoted by reference numeral 21a in FIG. 1, the same servo information of the first set is recorded. On servo identification signals to be described later which are included in the servo information, the same information is recorded.

On the areas on which the servo information of the same set is recorded, the pattern peculiar to the set is recorded in the sequence peculiar to the set. When sets are different, patterns constructing servo information are different from each other or, even if information is the same, sequences are different from each other.

Therefore, it is sufficient to unify format specifications of servo information for each set, and various formats are considered.

The servo identification signal according to the present invention is a signal for specifying a set of servo information and is necessary at the time of selecting servo information to be actually used. Consequently, the servo identification signals have a specification common to all of the servo information and are disposed in the same position.

### Configuration of Servo Information

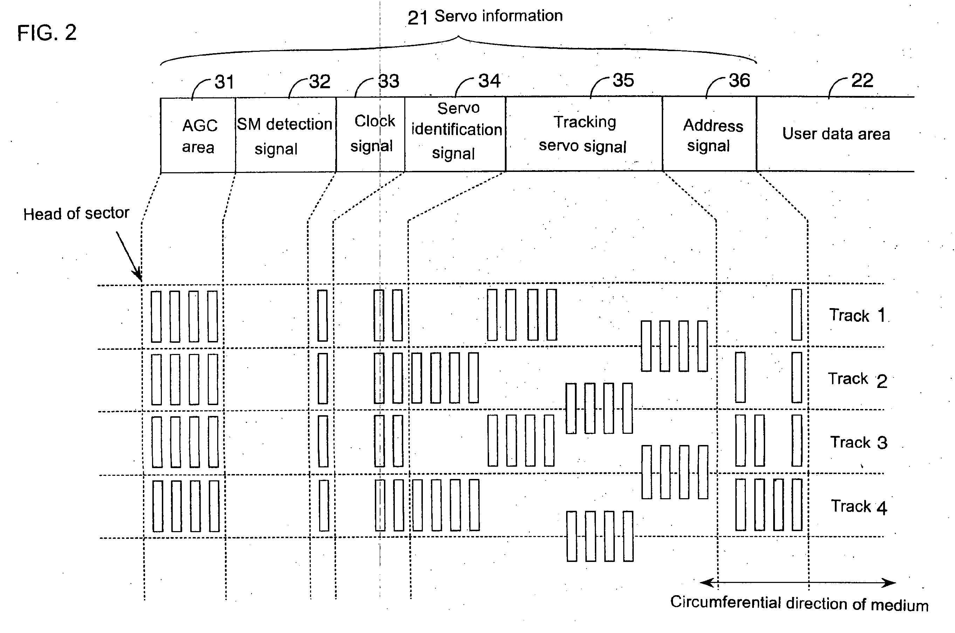

FIG. 2 is an explanatory diagram showing an example of the format of servo information 21 used in the present invention.

The diagram shows a format of servo information of a specific set, for example, a format of the servo information 21a. The pattern in the lower part of FIG. 2 shows signals recorded in a binary pattern.

In this embodiment, one piece of servo information 21 is constructed of, in order from the head, an AGC area 31, an SM detection signal 32, a clock signal 33, a servo identification number 34, a tracking servo signal 35, and an address signal 36. As described above, the information is not limited to the above. Other information may be added and the sequence is not limited to this.

The servo identification signal 34 is an essential signal which characterizes the present invention. The servo identification signals 34 are not fixed in the position identified above, but it is sufficient to dispose the servo identification signals 34 in a position common to the servo information of all the sets.

Generally, one track is divided into a plurality of sectors and one sector is constructed of the servo information area 21 and the user data area 22. In the case of FIG. 2, an AGC area is disposed at the head of a sector.

In FIG. 2, the servo identification signal 34 is information for identifying a set of servo information. On the area (21a) of the servo pattern of the same set as that in FIG. 2, the servo identification signal 34 of the same pattern as shown in the figure is recorded. On the servo information (21 b, 21c, 21 d) of the other sets, the servo identification signals 34 different from the pattern are recorded.

For example, in the case of recording the servo identification signal 34 as a binary pattern, when the servo identification signal 34 of the servo pattern 21a shown in the figure is "0011", the patterns are made different from each other as follows. The servo identification signal 34 of the servo pattern 21b is set as "0001", the servo identification signal 34 of the servo pattern 21c is set as "0010", and the servo identification signal 34 of the servo pattern 21d is set as "0100". As the pattern of the servo identification signal 34, a pattern other than the binary pattern such as an amplitude gray code or a phase gray code may be used.

### Method of Selecting Servo Information

A method of selecting servo information of a magnetic disk having such servo information and a method of assembling the magnetic disk in a magnetic disk drive (hereinafter, referred to as HDD) will be described.
(A) First, on a magnetic disk on which no information is recorded, the servo information 21 as shown in FIG. 2 is written by the magnetic transfer method shown in FIGS. 7(a) to FIG. 7(d). Specifically, a magnetic transfer master in which patterns of pits and projections corresponding to four servo patterns (21a, 21b, 21c, 21d) are formed is prepared. A magnetic disk is initially magnetized in one direction and, after that, in a state where the magnetic disk and the magnetic transfer master are in close contact to each other, a magnetic field opposite in direction to the initial magnetization is applied to separate the magnetic disk and the magnetic transfer master from each other. Thus, four sets of servo patterns (21a, 21b, 21c, 21d) shown in FIG. 1 are recorded as magnetic information.
(B) Next, the four sets of servo patterns are sequentially inspected for a defect. The inspection is conducted, with a magnetic disk being mounted in a transfer defect inspecting apparatus conventionally used, by scanning the tracks of the magnetic disk from the inner radius side to the outer radius side with a magnetic head, reading a servo pattern of each sector, and checking whether a read signal waveform matches a predetermined signal waveform or not.
(C) When there is even one servo pattern which does not match the predetermined signal waveform, it is determined that servo information of a set to which the servo pattern belongs is defective. On the other hand, when all the servo patterns match a predetermined signal waveform, it is determined that servo information of a set to which servo pattern belongs is normal and it is recognized that the servo information can be used at the time of actual recording/reproduction of user data.

For example, the servo patterns 21a of a first set are inspected. If there is a defect in the servo patterns 21a, the servo patterns 21b of a second set are inspected. If there is a defect also in the servo patterns 21b, the servo patterns 21c of a third set are inspected. When all of the servo patterns 21c are normally read, the servo information of the third set to which the servo patterns 21 c belong is selected as servo information for recording/ reproduction. When the recorded servo information of all the sets is determined to be defective, the magnetic disk is processed as a defective.

(d) In such a manner, servo information to be used for recording/reproduction is selected from the recorded servo information of the plurality of sets. Identification information for specifying the set of the selected servo information is stored in an HDD to which the magnetic disk is to be assembled.

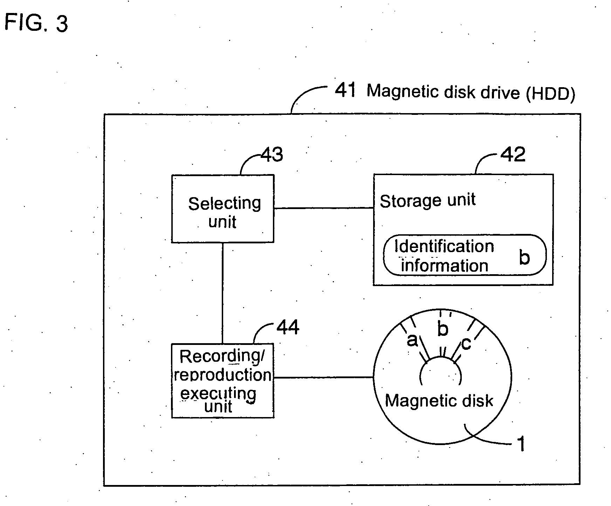

FIG. 3 is a schematic configuration block diagram showing an embodiment of the magnetic disk drive (HDD) of the present invention.

An HDD 41 is constructed mainly of the magnetic disk 1 as shown in FIG. 1, a storage unit 42, a selecting unit 43, and a recording/reproduction executing unit 44. The storage unit 42 is a nonvolatile memory storing identification information for specifying the set of servo information selected by the above-described selecting method.

The selecting unit 43 reads the identification information recorded on the storage unit 42, recognizes a set of servo information corresponding to the identification information, and selects the servo identification signal 34 specifying the set.

The selected servo identification signal 34 or information corresponding to the signal is supplied to the recording/ reproduction executing unit 44. On the basis of the servo identification signal 34 given, the recording/reproduction executing unit 44 executes a recording or reproducing process while searching for a servo pattern on the magnetic disk 1 matching the servo identification signal 34.

As the storage unit 42, a device such as a ROM or EEPROM having identification information prestored therein may be used and assembled in the HDD.

In FIG. 3, when it is assumed that "identification information b" is stored in the recording unit 42, the selecting unit 43 reads the "identification information b" and supplies the servo identification signal 34 corresponding to the "identification information b" to the recording/reproduction executing unit 44. The recording/reproduction executing unit 44 sequentially reads the servo identification signals 34 on the magnetic disk 1, recognizes only servo information "b" of the set corresponding to the "identification information b" as a servo pattern and, on the basis of the servo information, stores or reproduces user data.

Even when servo information (a, c) of other sets is stored on the magnetic disk 1, the servo information (a, c) is ignored and simply used as portions of the user data areas. Therefore, parts having been occupied by the non-selected servo information (a, c) are overwritten with user data later, so that the servo information (a, c) is sequentially erased.

Since servo information of a plurality of sets is recorded on a single magnetic disk as described above, if all the servo information of at least one set is normally recorded, the magnetic disk can be assembled as a non-defective product into an HDD, so that the yield of the magnetic disks can be increased. Moreover, servo information of a plurality of sets can be recorded almost simultaneously by the magnetic transfer method. Thus, the manufacturing cost can be suppressed to be low.

In the case of recording "n" sets of servo information onto a magnetic disk, in the foregoing embodiment, if one normal set of servo information is found, the set is selected. It is also possible to check whether there is a defect or not in servo information of all the "n" sets and, if there are m pieces of servo information determined to be normal, store all the identification information corresponding to the m pieces of servo information into the storage unit 42. In this case, it is sufficient to select any of the m pieces of identification information by the selecting unit 43.

### Configuration and Production of Magnetic Transfer Master

In the present invention, it is necessary to produce a magnetic transfer master in which patterns of pits and projections necessary for magnetically transferring servo information to areas corresponding to areas of a plurality of sets of servo information as shown in FIG. 1 are formed in its surface. The pattern of pits and projections of the magnetic transfer master matches the configuration of the binary pattern of the servo information shown in FIG. 2. For example, a pit corresponds to the portion "1" in the binary pattern and a projection corresponds to the portion "0" in the binary pattern. The magnetic transfer master is produced by, for example, applying a resist on a silicon substrate, exposing the resist to an electron beam in a predetermined pattern shape, removing the part which is not irradiated with the electron beam by development, and forming a magnetic layer on the surface on which the pattern of pits and projections is formed by sputtering. To expose the resist in the predetermined pattern shape, it is sufficient to use a conventional electron beam lithography system.

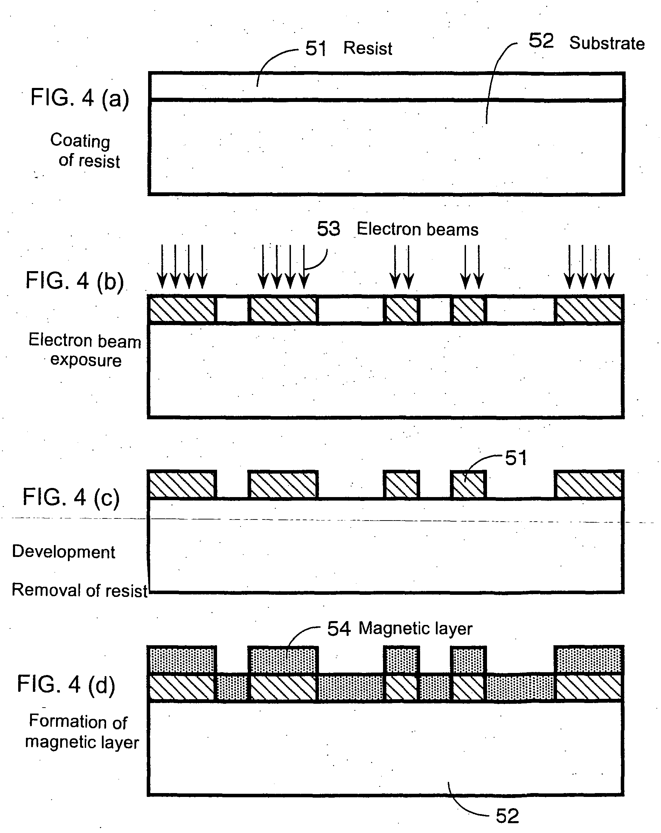

FIGS. 4(a) to 4(d) are explanatory diagrams showing a method of producing a magnetic transfer master of the present invention.

As shown in FIG. 4(a), an electron beam resist 51 is applied to a thickness of about 200 nm on a disc-shaped silicon substrate 52 having a flat surface by spin coating.

As shown in FIG. 4(b), the resist 51 is irradiated with and exposed to electron beams for forming a predetermined pattern of pits and projections. The substrate 52 is mounted on a direct acting stage which is movable in the radial direction of the substrate 52, and the resultant is set in an electron beam lithography system capable of rotating the substrate by a spindle motor.

The direct acting stage is moved to position an electron beam gun to an exposure start position of the substrate, the height of the substrate 52 is adjusted so that the electron beam is focused to the position of the resist 51 on the substrate and, after that, the substrate 52 is rotated by the spindle motor.

Synchronously with the rotary speed, an electron beam 53 is switched on/off so as to form a predetermined pattern of pits and projection in one track.

After completion of drawing of one track, the direct acting stage is moved by one track in the radial direction of the substrate and drawing of the next track is performed. By repeating the movement and the drawing process, a predetermined pattern is drawn to the exposure end position.

In FIG. 4(c), the exposed substrate 52 is taken out from the electron beam lithography system and the resist is removed by development. By the operation, the pattern of pits and projections is formed on the surface so as to correspond to the position where the servo pattern is be recorded.

In FIG. 4(d), a magnetic layer 54 is formed on the pattern of pits and projections. For example, the magnetic layer 54 can be formed by disposing the substrate 52 of FIG. 4(c) in a vacuum vessel and performing sputtering by using a Co target. With Ar as sputter gas, 0.5 Pa as Ar gas pressure, and 20 nm/min as sputtering yield, a Co film 54 having a thickness of about 200 nm is formed on the surface. Thus, the magnetic layer 54 in the pattern of pits and projections is formed on a surface, thereby completing the magnetic transfer master.

As the material of the magnetic layer 54, other than Co, a ferromagnetic material can be used. For example, CoCr, FeCo, or the like may be used. In FIG. 4, the magnetic layer 54 is formed directly on the pits and projections in the resist 51. The pattern of pits and projections may be formed in the surface of the substrate itself by lift-off or etching the substrate 52 on the basis of the resist 51.

Further, after forming the pattern of pits and projections in FIG. 4(c), an Ni stamper having a reverse shape may be produced on the basis of the pattern of pits and projections. Further, by 2P transfer, a magnetic transfer master having the same surface shape as the pattern of pits and projections of FIG. 4(c) may be produced. By the method, a plurality of magnetic transfer masters can be produced from the master substrate produced by single exposure.

### Example of Servo Information Adapted to Model

In the present invention, a plurality of sets of servo information are recorded on a single magnetic disk. The recording process is performed before the magnetic disk is mounted in an HDD. Therefore, in the case where the magnetic disk having the same physical shape can be mounted in HDDs of different models, all the servo information adapted to the models may be recorded on the magnetic disk.

For example, in the case of a magnetic disk which can be mounted in any of HDDs of models A, B, and C, when servo information corresponding to the model A, servo information corresponding to the model B, and servo information corresponding to the model C is stored in the single magnetic disk, it is unnecessary to manage magnetic disks for the respective models of the HDDs. It is sufficient to simply perform a work of assembling the single magnetic disk on which three kinds of servo information are recorded into an HDD. Consequently, the manufacturing cost and management cots of the HDD can be reduced. After the magnetic disk is assembled in the HDD, only the servo information corresponding to the model is used and the other servo information is ignored and, later, overwritten with user data.

By forming a magnetic transfer master having a pattern of pits and projections in which servo patterns for respective models are coresident, it becomes unnecessary to produce different magnetic transfer masters for the respective models. The manufacturing cost and the management cost of the magnetic transfer master can be reduced and a work error in magnetic transfer due to existence of a plurality of magnetic transfer masters can be prevented.

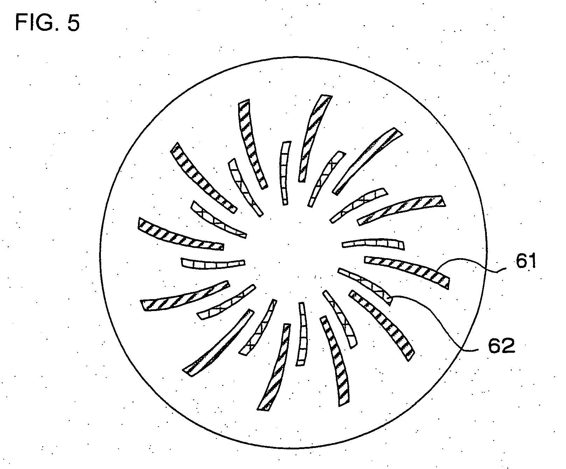

For example, by forming one magnetic transfer master having patterns of pits and projections corresponding to both servo information 61 for a 3.5-inch magnetic disk and servo information 62 for a 2.5-inch magnetic disk as shown in FIG. 5, the servo information can be magnetically transferred to a 3.5-inch magnetic disk and a 2.5-inch magnetic disk on the basis of the master.

### Example of Servo Information Adapted to Eccentricity

By recording, as servo information of a plurality of sets to be recorded on a magnetic disk, some position-shifted servo patterns in correspondence with the centers of rotation deviated due to eccentricities on the assumption that an eccentricity occurs at the time of a magnetic transfer on a magnetic disk, even an eccentric magnetic disk is not disposed as a defective but can be used.

Specifically, if the recorded servo information of a plurality of sets includes a set of servo information adapted to an actual eccentricity, recording and reproduction can be performed by using the servo information of the set and the yield in the case where an eccentricity occurs can be improved. The procedure of recording servo information adapted to the eccentricity will be described below.

Here, an explanation will be given to a case of recording a total of four sets of servo information; one set for no eccentricity and three sets for three kinds of eccentricities onto a single magnetic disk medium. It is preferable to record a number of sets of servo information as long as patterns of the sets do not overlap one another. Since an eccentricity of a magnetic disk varies, by recording a larger number of sets of servo information in correspondence with different eccentricity amounts, a larger number of eccentricities can be corrected and the yield can be further improved.
(A) First, a magnetic transfer master having patterns of pits and projections corresponding to four sets of servo information of different eccentricities is produced.
   The electronic beam lithography system is used for producing the magnetic transfer master and its direct acting stage is movable not only in one direction (called an X-axis direction) in the radial direction of the substrate but also in any directions in the radial direction, specifically, a direction perpendicular to the X axis direction and a direction inclined by a predetermined angle from the X axis direction.
   (A-1) As shown in FIG. 4(a), the substrate 52 on which a resist is applied is prepared, mounted on the electronic beam lithography system, and positioned. After that, as shown in FIG. 4(b), an electron beam is emitted to draw a pattern corresponding to servo information of a first set in a position on the assumption that there is no eccentricity.
   (A-2) Next, the substrate 52 is moved in the X-axis direction by a predetermined distance. After that, an electron beam is emitted in a manner similar to that in FIG. 4(b) to draw a pattern corresponding to servo information of a second set. At this time, it is necessary to shift the substrate 52 also in the circumferential direction so that the pattern of the second set does not cross the pattern of the first set already drawn.
      A proper distance of movement in the X axis direction is not particularly unconditionally determined. It is sufficient to move the substrate by, for example, about 10 µm and draw the pattern of the second set. Different from the magnetic disk described in the embodiment of FIG. 1, the servo information of the second set may be the same as that of the first set except for the servo identification signal 34. Specifically, in this embodiment, the servo information of the plurality of sets comprises the same information regarding positioning (an SM detection signal, a tracking servo signal, and the like) but is different from one another only as to the position where it is recorded so as to address eccentricities. The servo identification signals 34 are used to identify sets of servo information and therefore have to be different from each other.
   (A-3) Further, the substrate 52 is moved in the X-axis direction to return to the original position, moved by a predetermined distance (for example, 10 µm) in the direction perpendicular to the X axis, and shifted also in the circumferential direction. After that, in a manner similar to that in FIG. 4(b), a pattern corresponding to servo information of a third set is drawn.
   (A-4) Finally, the substrate 52 is returned to the initial position, moved in the direction inclined from the X axis by 45 degrees by a predetermined distance (for example, 10 µm), and shifted also in the circumferential direction. After that, in a manner similar to that in FIG. 4(b), a pattern corresponding to servo information of a fourth set is drawn.
      Also for the servo information of the third and fourth sets, although the servo identification signals 34 which are different from each other are used, the same signals as those of the servo information of the first set may be employed for the other signals.
   (A-5) As described above, by performing processes similar to those of FIGS. 4(c) and 4(d) after drawing the patterns corresponding to the servo information of four sets, the magnetic transfer master which can cope with eccentricities is completed.
(B) Next, by using the magnetic transfer master, a magnetic disk is produced by the magnetic transfer method shown in FIG. 7. The magnetic disk produced in such a manner is a medium on which servo information of four sets whose centers of rotation are different from each other is record.
(C) Then, the magnetic disk is mounted in an HDD and inspected.
   The eccentricity amount is known only after the magnetic disk is mounted in an actual HDD. Consequently, the magnetic disk is assembled in an HDD and, in an almost shippable state, the set of servo information to be used is determined.
   (C-1) The HDD in which the magnetic disk of this embodiment is mounted is activated and, on the assumption that there is no eccentricity as usual, the servo information of the first set is selected and a servo characteristic of a predetermined track is measured. The servo characteristic means herein a servo tracking error which can be measured by measuring a servo residual. When there is no eccentricity, the servo residual is small. When there is an eccentricity, the servo residual is large.
   (C-2) Next, the servo information of the second set is selected and the servo characteristic is similarly measured. Further, the servo characteristics of the servo information of the third and fourth sets are also measured similarly. The results are compared with each other.
   (C-3) On the basis of the result of comparison, the servo information of the set which can be determined as a set having the least eccentricity amount is selected from the four sets. The selected servo information is used for recording/ reproducing actual user data. In this case as well, identification information corresponding to the selected set of servo information is stored in the storage unit 42 in the HDD.

In the case where an eccentricity still occurs even after the selected servo information is used, more preferably, conventional eccentricity correction is made at the time of actual recording/ reproducing operation so that normal tracking is enabled.

Hitherto, there is a case such that even if a set of servo information is correctly recorded, an eccentricity occurs at the time of assembling the magnetic disk into an HDD and cannot be addressed, and the magnetic disk cannot be used. By preliminarily recording a plurality of sets of servo information in consideration of eccentricities as in this embodiment, even if an eccentricity occurs after a magnetic disk is assembled in an HDD, the magnetic disk does not become defective but can be normally used by using any set of servo information.

Although the method of drawing patterns while moving the substrate 52 in three directions at the time of producing a magnetic transfer master has been described in this embodiment, it is also possible to fix the substrate 52 in the initial position, calculate a deviation amount of the pattern on the assumption that a predetermined eccentricity occurs, and change the direction of an electron beam, thereby drawing a pattern in consideration of an eccentricity.

Although physical movement of the substrate 52 accompanies an error, in the case of obtaining a deviation amount by calculation, occurrence of such an error can be prevented. Since the substrate is not moved, drawing time can be also shortened.

According to the present invention, a plurality of sets of servo information are recorded in a single information recording medium. Consequently, even if some sets of servo information are defective, if one set of servo information is non-defective, the information recording medium is not determined as a defective but can be used. Therefore, the yield of the information recording medium can be improved and the manufacturing cost can be reduced.

Since the magnetic transfer master has patterns corresponding to servo information of a plurality of sets, the manufacturing cost and the management cost can be reduced. Further, since a plurality of kinds of servo information adapted to some models are recorded in a single information recording medium, the manufacturing cost and the management cost can be reduced. Since a plurality of sets of servo information are recorded in consideration of some eccentricities on a single information recording medium, the yield can be improved and the manufacturing cost can be reduced.

## Claims

1. An information recording medium **characterized by** comprising a plurality of kinds or a plurality of sets of servo information recorded as magnetic information and used for detecting a position of the information recording medium relative to a magnetic head.

2. The information recording medium according to claim 1, **characterized in that** each of the plurality of kinds of servo information is constituted of a plurality of servo patterns radially formed at fixed intervals in the circumferential direction of a track, and servo patterns of different kinds are alternately arranged so as not to cross each other.

3. The information recording medium according to claim 1 or 2, **characterized in that** servo information of each set includes a servo identification signal specifying a set to which the servo information belongs.

4. The information recording medium according to claim 3, **characterized in that** each of the plurality of kinds of servo information is a pattern predetermined for each of models of magnetic disk drives in which the information recording medium is to be mounted.

5. The information recording medium according to claim 3, **characterized in that** each of the plurality of sets of servo information is a pattern formed by using a center of rotation thereof as a reference, the center of rotation deviated due to a predetermined eccentricity on the assumption that the eccentricity occurs.

6. The information recording medium according to any one of claims 1 to 5, **characterized in that** the plurality of kinds or the plurality of sets of servo information are recorded by magnetic transfer.

7. A magnetic disk drive in which an information recording medium according to any one of claims 3, 4 and 5 is mounted.

8. The magnetic disk drive according to claim 7, wherein servo information of a kind in which the absence of a defect is confirmed by a predetermined inspection method is selected from the plurality of kinds or the plurality of sets of servo information recorded on the information recording medium, and a recording/reproducing process is executed on the selected servo information.

9. The magnetic disk drive according to claim 7, comprising: a storage unit having identification information prestored therein, the identification information corresponding to a servo identification signal, the servo identification signal specifying a set of servo information; a selecting unit for reading identification information from the storage unit to select servo information of a set specified by a servo identification signal corresponding to the read identification information; and an executing unit for performing recording/reproduction by using only the servo information selected by the selecting unit.

10. A magnetic transfer master disk for recording a plurality of kinds of servo information on an information recording medium according to any one of claims 1 to 5 by magnetic transfer, wherein patterns of pits and projections for magnetically transferring the plurality of kinds of servo information are formed in areas corresponding to areas of the information recording medium on which the plurality of kinds or the plurality of sets of servo information are to be recorded.

11. A method of selecting servo information recorded on an information recording medium according to any one of claims 1 to 5, **characterized by** comprising the steps of: checking servo patterns of each kind or set of servo information for a defect; selecting servo information of an arbitrary kind or set from kinds or sets having no defect in servo patterns; and storing identification information specifying the selected kind or set of servo information onto a magnetic disk drive in which the information recording medium is mounted.

12. A method of recording servo information onto an information recording medium according to any one of claims 1 to 5, comprising the steps of:
initially magnetizing a magnetic layer formed on a surface of an information recording medium track by track in one direction;
bringing a magnetic transfer master and the information recording medium into close contact with each other, the magnetic transfer master having patterns of pits and projections formed thereon for magnetically transferring servo patterns including a servo identification signal specifying a kind of servo information to areas of the information recording medium on which a plurality of kinds or sets of servo information are to be recorded; and
applying a magnetic field opposite in direction to the initial magnetization and, after that, separating the magnetic transfer master and the information recording medium from each other.
